# FASCICULE DE BREVET EUROPEEN

(11) **EP 1 459 945 B1**
(45) Date de publication et mention de la délivrance du brevet: **30.09.2009**
(21) Numéro de dépôt: 04290296.5
(22) Date de dépôt: 04.02.2004
(51) Int. Cl.: B60R 21/20

(54) **Véhicule automobile muni d'un sac gonflable et d'un dispositif facilitant le déploiement du sac**
Kraftfahrzeug mit einem Gassack und einer Vorrichtung zum Erleichtern der Gassackentfaltung
Vehicle with an airbag and an apparatus to ease the airbag's deployment

(30) Priorité: 19.03.2003 FR 0303348
(43) Date de publication de la demande: 22.09.2004
(73) Titulaire: Möllertech, 91370 Verrieres le Buisson (FR)
(72) Inventeur: Chausset, François, 36250 Saint Maur (FR)
(74) Mandataire: Thinat, Michel

(56) Documents cités:
- EP-A- 0 873 916
- WO-A-02/100689
- US-A1- 2002 024 202
- US-A1- 2003 006 591
- US-B1- 6 340 172
- US-B1- 6 402 188
- US-B1- 6 517 110

## Description

L'invention concerne en général les véhicules automobiles munis de sacs gonflables de sécurité.

Plus précisément, l'invention concerne un véhicule automobile comprenant une carrosserie, une habillage lié à la carrosserie et interposé entre la carrosserie et l'intérieur du véhicule, un sac gonflable lié à la carrosserie et normalement disposé entre la carrosserie et l'habillage, des moyens de gonflage du sac en cas de choc, et au moins une sangle de guidage s'étendant normalement entre la carrosserie et l'habillage, la sangle étant solidaire de la carrosserie par une première extrémité et du sac par une seconde extrémité opposée à la première, le sac en se gonflant se déployant à l'intérieur du véhicule en entraînant la sangle.

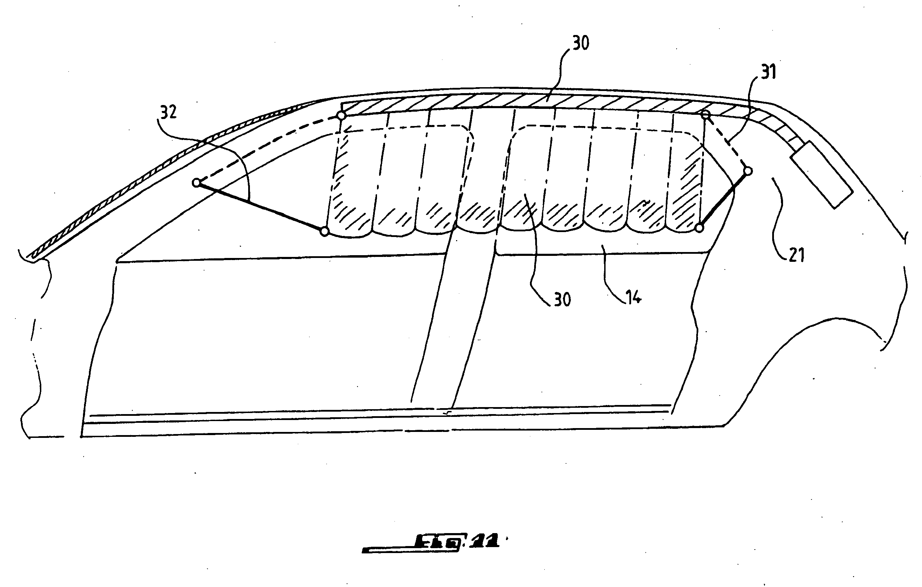

Des véhicules de ce type, connus des documents US 63401721 et US 65171101 comprennent notamment des sacs dits rideau, fixés immédiatement sous le pavillon du véhicule, sur des parties latérales de la carrosserie, et s'étendant approximativement le long de tout le pavillon. Ces sacs, en se gonflant, se déploient vers le bas, comme le montre la figure 11.

Le véhicule comprend typiquement pour chaque sac des sangles avant et arrière qui se déploient avec le sac et permettent de le tendre quand il est gonflé. Le sac doit se gonfler en quelques millisecondes en cas de choc, et il est particulièrement important pour la sécurité des passagers que rien ne vienne contrarier son mouvement.

Or, les sangles sont au départ lovées sur elles-mêmes, entre l'habillage et la carrosserie. Quand le sac se gonfle, ces sangles effectuent un mouvement général de pivotement vers le bas. Ce mouvement est rendu difficile par l'exiguïté de l'espace entre l'habillage et la carrosserie, et en particulier par la présence de nervures horizontales de raidissement de l'habillage s'étendant entre l'habillage et la carrosserie, qui freinent le déplacement de la sangle arrière.

Dans ce contexte, la présente invention a pour but de pallier le défaut mentionné ci-dessus et de faciliter le déploiement du sac.

A cette fin, le véhicule de l'invention, par ailleurs conforme à la définition générique qu'en donne le préambule ci-dessus, est essentiellement caractérisé en ce que qu'il comprend des moyens pour écarter l'habillage de la carrosserie quand le sac se gonfle de façon à faciliter le débattement de la sangle.

Dans un mode de réalisation possible de l'invention, les moyens pour écarter l'habillage comprennent une rampe mobile liée à la carrosserie et mobile par rapport à celle-ci entre une position d'attente relativement plus proche de la carrosserie et une position de passage relativement plus écartée de la carrosserie, l'habillage étant fixé à la rampe mobile, le sac sollicitant la rampe mobile de sa position d'attente à sa position de passage quand il se gonfle .

Avantageusement, la rampe mobile comprend des moyens de butée limitant la course de la rampe mobile de sa position d'attente à sa position de passage.

De préférence, les moyens pour écarter l'habillage comprennent une rampe fixe fixée à la carrosserie et portant un premier organe de verrouillage, la rampe mobile portant un second organe de verrouillage coopérant avec le premier pour verrouiller de façon amovible la rampe mobile dans sa position d'attente quand la sollicitation du sac sur l'habillage est inférieure à une première valeur prédéterminée, et libérant la rampe mobile de sa position d'attente quand la sollicitation du sac sur l'habillage est supérieure à la première valeur prédéterminée.

Par exemple, la rampe mobile comprend un corps portant le second organe de verrouillage et auquel l'habillage est lié, et au moins une patte inférieure solidaire du corps et engagée dans un logement de la rampe fixe complémentaire de ladite patte, la rampe mobile reposant sur un fond du logement par l'intermédiaire de la patte et passant de sa position d'attente à sa position de passage par basculement sur cette patte inférieure.

Avantageusement, l'habillage comprend au moins une première pièce rigidement fixée à la rampe mobile, une seconde pièce contiguë à la première et disposée en regard du sac de telle sorte que le sac sollicite la seconde pièce dans une direction opposée à la carrosserie quand il se gonfle, et des moyens de liaison entre les première et seconde pièces transmettant à la première pièce la sollicitation subie par la seconde pièce jusqu'à ce que cette sollicitation dépasse une seconde valeur prédéterminée supérieure à la première, les moyens de liaison autorisant au-delà de la seconde valeur un écartement mutuel des première et seconde pièces définissant une ouverture par laquelle le sac se déploie à l'intérieur du véhicule.

De préférence, la rampe mobile présente une face supérieure tournée vers le sac et s'étendant entre la carrosserie et une zone de l'habillage dans laquelle l'ouverture se crée quand le sac se gonfle.

Par exemple, la face supérieure de la rampe mobile est délimitée du côté de l'habillage par un bord intérieur, la première pièce comprenant un bord supérieur s'étendant parallèlement au bord intérieur, à proximité de celui-ci, la seconde pièce comprenant un bord inférieur engagé entre ledit bord intérieur et ledit bord supérieur.

Avantageusement, la première pièce comprend au moins un doigt de fixation encliqueté élastiquement dans un orifice de fixation de la rampe mobile complémentaire dudit doigt.

De préférence, le second organe de verrouillage est un doigt de verrouillage, le premier organe de verrouillage étant un orifice de verrouillage complémentaire dudit doigt et dans lequel le doigt de fixation est encliqueté élastiquement dans la position d'attente de la rampe mobile.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective de la partie arrière d'un véhicule selon l'invention,
- la figure 2 est une vue partielle en coupe dans un plan transversal vertical du sac, et des moyens d'écartement de l'habillage, suivant l'incidence des flèches II de la figure 8, le sac n'étant pas gonflé,
- la figure 3 est une vue similaire à la figure 2, le sac étant partiellement gonflé et la rampe mobile étant en position de passage,
- la figure 4 est une vue similaire à la figure 2, en coupe suivant les flèches IV de la figure 8, le sac étant encore un peu plus gonflé et les deux pièces de l'habillage étant mutuellement écartées pour laisser passer le sac,
- la figure 5 est une vue en perspective des rampes fixe et mobile non assemblées,
- la figure 6 est une vue en perspective de la zone de la carrosserie sur laquelle la rampe fixe vient se fixer, et des rampes fixe et mobile à l'état assemblé,
- la figure 7 est une vue en perspective des rampes fixe et mobile à l'état assemblé partiellement montées sur la carrosserie,
- la figure 8 une vue en perspective des rampes fixe et mobile à l'état assemblé montées sur la carrosserie et de la pièce de l'habillage qui vient se fixer sur la rampe mobile,
- la figure 9 est une vue en coupe de la carrosserie et des rampes fixe et mobile, selon l'incidence des flèches IX de la figure 8,
- la figure 10 est une vue en coupe de la carrosserie, des rampes fixe et mobile et de la pièce de l'habillage qui vient se fixer sur la rampe mobile, selon l'incidence des flèches X de la figure 8, et
- la figure 11 est une vue latérale de l'intérieur du véhicule, montrant le sac gonflable au repos et en position déployée, et la position des sangles avant et arrière dans les deux cas.

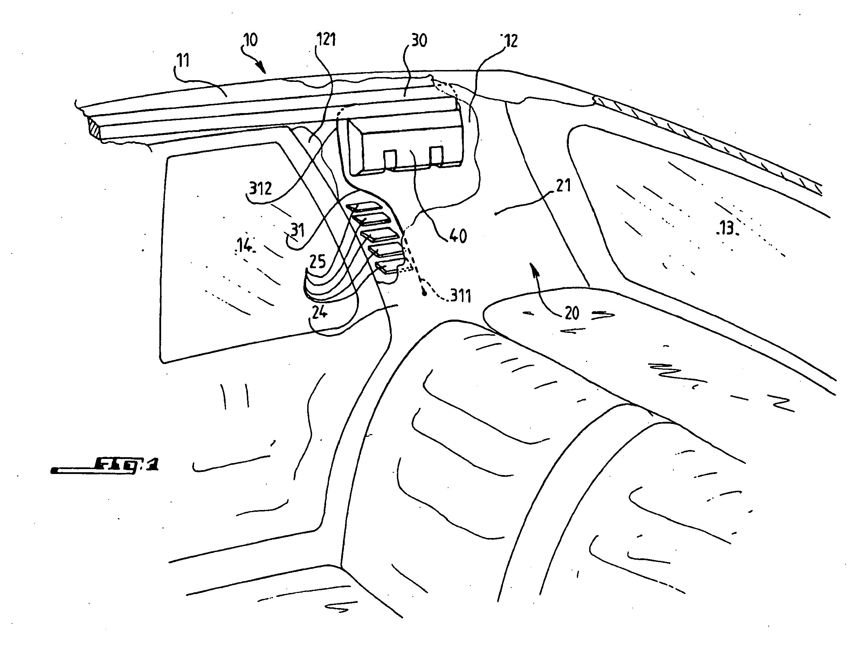

Le véhicule automobile dont l'intérieur est représenté sur la figure 1 comprend une carrosserie 10, un habillage 20 lié à la carrosserie 10 et interposé entre la carrosserie 10 et l'intérieur du véhicule, un sac gonflable 30 lié à la carrosserie et disposé entre la carrosserie 10 et l'habillage 20, des moyens de gonflage du sac 30 en cas de choc, et au moins une sangle de guidage 31 s'étendant entre la carrosserie 10 et l'habillage 20, la sangle 31 étant solidaire de la carrosserie 10 par une première extrémité 311 et du sac 30 par une seconde extrémité 312 opposée à la première.

Les moyens de gonflage du sac 30 sont par exemple des moyens pyrotechniques de type connu déclenchant le gonflement du sac 30 en cas d'impact sur le véhicule.

La carrosserie 10 comprend au moins le pavillon du véhicule 11, c'est-à-dire le toit, et un panneau latéral arrière 12 solidaire du pavillon 11 et situé entre la lunette arrière 13 et la portière droite arrière 14.

L'habillage 20 recouvre à la fois le pavillon 11 et le panneau latéral arrière 12. Il comprend, entre autres, les garnitures de custode et de pavillon.

Le sac 30 est normalement à l'état replié. Dans l'exemple de réalisation représenté sur la figure 11, le sac 30 à l'état replié est fixé sur une partie latérale de la carrosserie, immédiatement sous le pavillon 11 du véhicule. Il s'étend le long de tout le pavillon 11, au-dessus des portières du véhicule.

Il se gonfle en cas de choc et se déploie à l'intérieur du véhicule, vers le bas par rapport à sa position à l'état replié, le long du côté latéral droit du véhicule.

Le sac 30 est guidé par deux sangles, une sangle avant 32, solidaire d'une partie du sac 30 qui constitue un bord avant du sac 30 à l'état déployé, et la sangle 31, solidaire d'une partie du sac 30 qui constitue un bord arrière du sac à l'état déployé.

La sangle 31 et la sangle avant 32 sont toutes deux lovées en spirale entre la carrosserie 10 et l'habillage 20 quand le sac 30 est dans son état replié et fixées à la carrosserie par des moyens facilement frangibles en cas de déploiement du sac, par exemple du papier adhésif.

Comme le montre la figure 1, la première extrémité 311 de la sangle 31 est fixée sur la carrosserie 10 par des moyens connus, sous le sac 30, par exemple en un point situé au milieu du panneau latéral arrière 12 selon un axe vertical, et à distance d'un côté avant 121 de ce panneau 12 s'étendant le long de la portière 14.

La sangle avant 32 est elle aussi fixée par une extrémité à la carrosserie 10, entre le pare-brise et la portière avant du véhicule.

Le sac 30, en se déployant vers le bas à l'intérieur du véhicule, entraîne les sangles et provoque l'arrachement du papier adhésif et le dépliement des sangles. En particulier, le sac 30 entraîne la seconde extrémité 312 de la sangle 31 vers le bas du véhicule, provoquant un pivotement général de la sangle 31 vers le bas relativement à la carrosserie 10 et à l'habillage 20.

On notera que, comme le montre la figure 1, l'habillage 20 porte des nervures de raidissement 25 sur un bord 24 s'étendant le long de la portière 14. Ces nervures s'étendent entre une face extérieure 26 de l'habillage 20 tournée vers la carrosserie 10 et le panneau latéral arrière 12 de cette carrosserie 10. Elles sont mutuellement parallèles et superposées, et s'étendent dans des plans respectifs perpendiculaires au panneau latéral arrière 12 de la carrosserie 10 et parallèles à l'axe longitudinal du véhicule.

La sangle 31, dans son mouvement vers le bas du véhicule, doit se glisser entre ces nervures 25 et le panneau latéral arrière 12 de la carrosserie 10.

Selon l'invention, le véhicule comprend des moyens pour écarter l'habillage 20 de la carrosserie 10 quand le sac 30 se gonfle de façon à faciliter le débattement de la sangle 31.

La sangle 31, en particulier, peut alors se glisser plus facilement entre les nervures 25 et la partie latérale arrière 12 de la carrosserie 10.

Plus précisément, les moyens pour écarter l'habillage 20 comprennent une rampe mobile 40 liée à la carrosserie 10 et mobile par rapport à celle-ci entre une position d'attente relativement plus proche de la carrosserie 10 et une position de passage relativement plus écartée de la carrosserie 10.

L'habillage 20 est fixé à la rampe mobile 40, et le sac 30 sollicite la rampe mobile 40 de sa position d'attente à sa position de passage quand il se gonfle.

Les moyens pour écarter l'habillage 20 comprennent également une rampe fixe 50 fixée à la partie latérale arrière 12 de la carrosserie 10 et portant un premier organe de verrouillage 51.

La rampe mobile 40 porte un second organe de verrouillage 42 coopérant avec le premier pour verrouiller de façon amovible la rampe mobile 40 dans sa position d'attente quand la sollicitation du sac 30 sur l'habillage 20 est inférieure à une première valeur prédéterminée, et libérant la rampe mobile 40 de sa position d'attente quand la sollicitation du sac 30 sur l'habillage 20 est supérieure à la première valeur prédéterminée.

Bien entendu, les rampes fixe 50 et mobile 40 sont disposées entre le panneau latéral arrière 12 de la carrosserie et l'habillage 20.

Par ailleurs, l'habillage 20 comprend au moins une première pièce 21 rigidement fixée à la rampe mobile 40, une seconde pièce 22 contiguë à la première et disposée en regard du sac 30 de telle sorte que le sac 30 sollicite la seconde pièce 22 dans une direction opposée à la carrosserie 10 quand il se gonfle, et des moyens de liaison entre les première et seconde pièces 21 et 22 transmettant à la première pièce 21 la sollicitation subie par la seconde pièce 22 jusqu'à ce que cette sollicitation dépasse une seconde valeur prédéterminée supérieure à la première, les moyens de liaison autorisant au-delà de la seconde valeur un écartement mutuel des première et seconde pièces 21 et 22 définissant une ouverture 23 par laquelle le sac 30 se déploie à l'intérieur du véhicule.

Quand le sac 30 commence à se gonfler, il reste dans un premier temps confiné entre la carrosserie 10 et l'habillage 20. La sollicitation du sac 30 sur la seconde pièce 22 augmente alors parallèlement avec le volume du sac 30, jusqu'à ce qu'elle dépasse la seconde valeur prédéterminée.

La création de l'ouverture 23 permet au sac 30, dans un deuxième temps, de se déployer à l'intérieur du véhicule, la sollicitation du sac sur la première pièce se stabilisant alors ou allant en décroissant.

Dans le mode de réalisation représenté sur les figures 1 à 10, la première pièce 21 est la garniture de custode, qui s'étend parallèlement et en regard du panneau latéral arrière 12, et la seconde pièce 22 est la garniture de pavillon, qui s'étend parallèlement et en regard du pavillon 11.

La rampe mobile 40 est disposée sous le sac 30 et présente une face supérieure 45 tournée vers ce sac 30 et s'étendant entre le panneau latéral arrière 12 de la carrosserie 10 et une zone de l'habillage dans laquelle l'ouverture 23 se crée quand le sac 30 se gonfle. Le sac 30 est ainsi guidé par la face supérieure 45 de la rampe mobile 40 vers l'ouverture 23 quand il se gonfle. Il ne peut pas se gonfler entre la carrosserie et l'habillage.

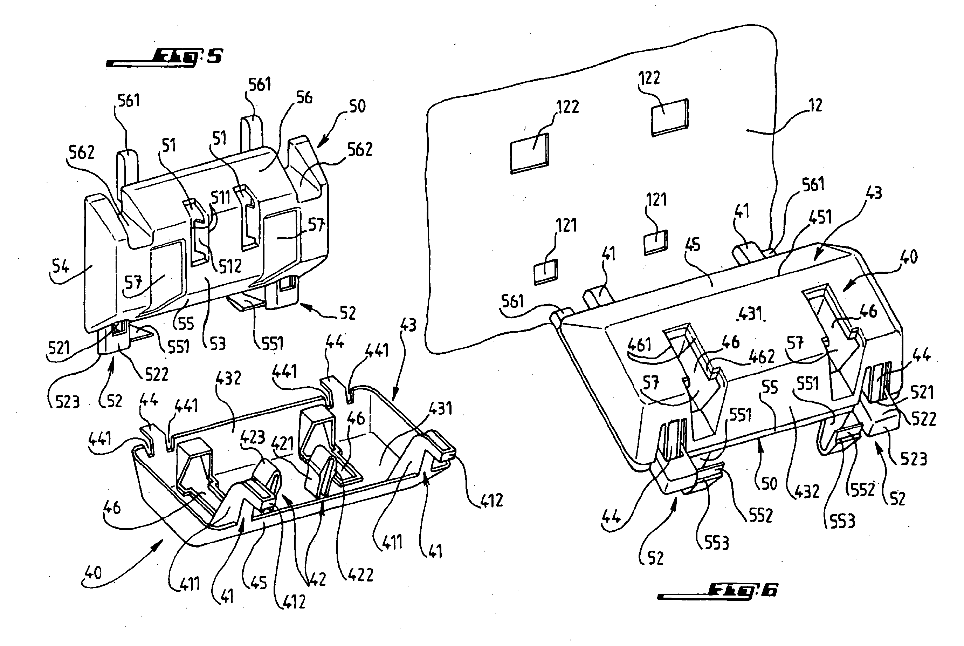

On va maintenant décrire dans le détail les rampes fixe 50 et mobile 40, en référence aux figures 5 à 10.

La rampe fixe 50 est un boîtier présentant une face fixe intérieure 53 rectangulaire tournée vers l'habillage 20, et des bords dressés avant 54, arrière 54, inférieur 55 et supérieur 56 se dressant vers la carrosserie 10 à partir de quatre côtés de la face fixe intérieure 53. La rampe fixe 50 est plaquée sur le panneau latéral arrière 12 par des côtés libres des quatre bords dressés 54 à 56 opposés à la face fixe intérieure 53.

On notera que les bords dressés inférieur 55 et supérieur 56 sont légèrement inclinés vers l'extérieur de la rampe fixe 50 à partir de la face fixe intérieure 53.

Comme le montre la figure 5, la rampe fixe 50 comprend deux pattes supérieures 561 en L solidaires du côté libre du bord dressé supérieur 56. Ces pattes comprennent chacune une première partie s'étendant perpendiculairement à la face fixe intérieure 53 à partir du bord 56, et en direction opposée à la face fixe intérieure 53 et une deuxième partie s'étendant à partir de la première parallèlement à la face fixe intérieure 53 vers l'extérieur de la rampe fixe 50.

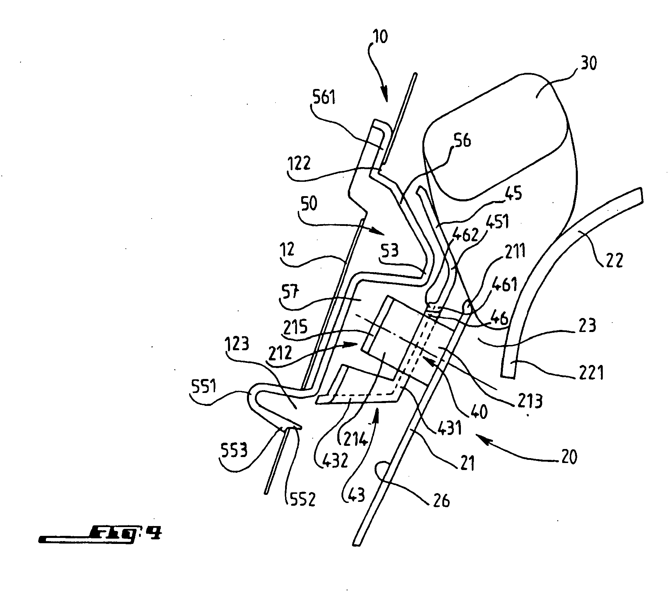

La rampe fixe comprend également deux crochets de fixation 551 en C solidaires du côté libre du bord dressé inférieur 55, visibles sur la figure 4. Ces crochets présentent chacun une première extrémité solidaire dudit côté libre, s'étendent à partir de leur première extrémité d'un côté opposé à la face fixe intérieure 53, vers l'extérieur de la rampe fixe 50, et présentent une seconde extrémité libre 552 disposée approximativement sous la première extrémité.

La seconde extrémité 552 présente un bord libre d'épaisseur réduite d'un côté opposé à la rampe fixe 50, un épaulement 553 séparant ce bord libre du reste du crochet.

Le panneau latéral arrière 12 de la carrosserie 10 comprend deux ouvertures supérieures 122 et deux ouvertures inférieures 123.

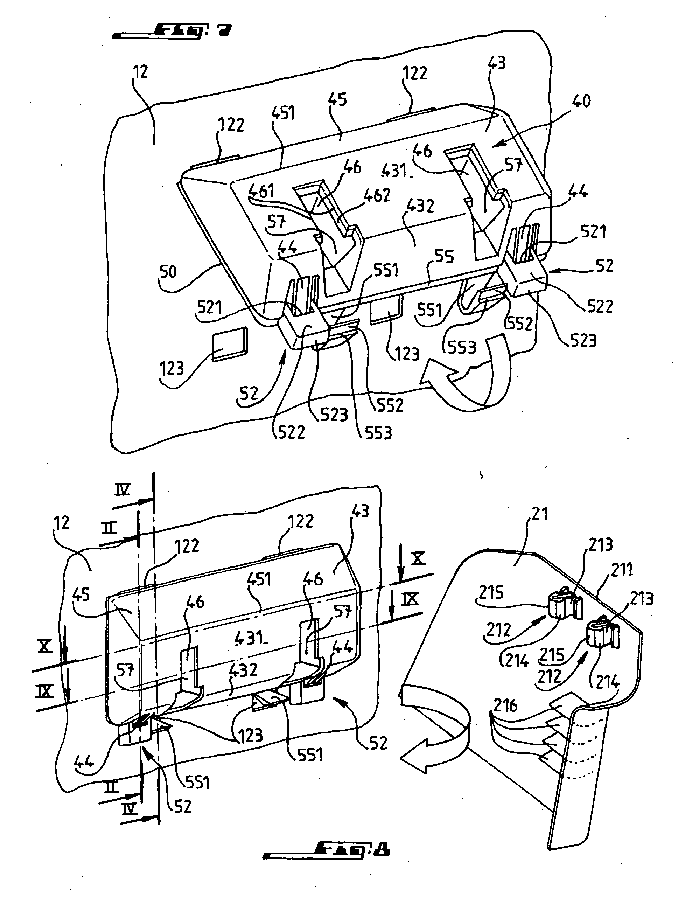

Comme le montrent les figures 6 et 7, la rampe fixe 50 est fixée sur la carrosserie par les pattes supérieures 561 venant s'engager dans les ouvertures supérieures 122 et se plaquer sur une face du panneau latéral arrière 12 opposée à la rampe fixe 50, et par les crochets de fixation 551 engagés dans les ouvertures inférieures 123. Les secondes extrémités 552 viennent chacune se caler sur un bord inférieur de l'ouverture inférieure 123 correspondante opposé à la rampe fixe 50, de telle sorte que ce bord est disposé dans l'angle entre l'épaulement 553 et le bord libre d'épaisseur réduite. L'épaulement 553 est plaqué sur la carrosserie 10 d'un côté opposé à la rampe fixe 50 et le bord libre d'épaisseur réduite engagé dans l'ouverture inférieure 123 et en appui sur le bord inférieur de celle-ci.

La rampe mobile 40 comprend un corps 43 de forme générale identique à celle de la rampe fixe 50 et complémentaire de celle-ci, c'est-à-dire présentant une face mobile intérieure 431 rectangulaire et des bords dressés mobiles supérieur, inférieur 432 et latéraux se dressant à partir de quatre côtés de la face mobile intérieure 431 vers la carrosserie 10. En position d'attente, la rampe mobile 40 est emboîtée sur la rampe fixe 50, la face mobile intérieure 431 étant plaquée sur la face fixe intérieure 53, et les bords dressés mobiles étant plaqués sur les bords dressés 54 à 56 de la rampe fixe 50.

Le bord dressé supérieur constitue la face supérieure 45 de la rampe mobile 40.

La rampe mobile 40 comprend deux pattes inférieures 44 droites solidaires du bord dressé mobile inférieur 432, et s'étendant parallèlement à la face mobile intérieure 431 vers l'extérieur de la rampe mobile 40.

La rampe fixe 50 comprend deux logements 52 solidaires du bord dressé inférieur 55 et faisant saillie vers l'extérieur de la rampe fixe 50 par rapport à ce bord.

Ces logements 52 sont sensiblement parallélépipédiques et sont plaqués sur la carrosserie 10 par une face ouverte. Ils portent chacun une ouverture 521 ménagée sur une face fermée 522 opposée à la face ouverte.

Les pattes inférieures 44 de la rampe mobile 40 sont engagées dans les logements 52 à travers les ouvertures 521 et reposent sur des fonds 523 des logements 52 opposés au bord dressé inférieur 55.

La rampe mobile 40 repose sur les fonds 523 par l'intermédiaire des pattes inférieures 44 et passe de sa position d'attente à sa position de passage par basculement sur les pattes inférieures 44.

On notera que l'ouverture 521 est ménagée dans une partie de la face fermée 521 proche du bord dressé inférieur 55, la partie de cette face fermée proche du fond 523 étant pleine.

La patte 44 ne peut pas se dégager de son logement 52 en glissant sur le fond 523.

Le bord mobile inférieur 432 porte des encoches 441 de part et d'autre des pattes 44 dans lesquelles viennent s'insérer les côtés des ouvertures 521.

La rampe mobile 40 comprend des moyens de butée limitant la course de la rampe mobile 40 de sa position d'attente à sa position de passage.

Ces moyens comprennent deux pattes de butées en L 41 solidaires de la face supérieure 45. Chaque patte comprend une branche de liaison 411 droite, solidaire de la face supérieure 45 par une première extrémité et s'étendant sensiblement perpendiculairement à la face mobile intérieure 431 et une branche de butée 412 droite, solidaire d'une deuxième extrémité de la branche de liaison 411 opposée à la première et perpendiculaire à cette branche.

La branche de liaison 411 s'étend dans une direction opposée à la face mobile intérieure 431 à partir de sa première extrémité, et la branche de butée 412 vers l'extérieur de la rampe mobile 40 à partir de la branche de liaison 411.

Les branches de liaison 411 sont engagées à travers les ouvertures supérieures 122 de telle sorte que les pattes de butées 412 sont d'un côté du panneau latéral arrière 12 opposé au corps 43 de la rampe mobile 40.

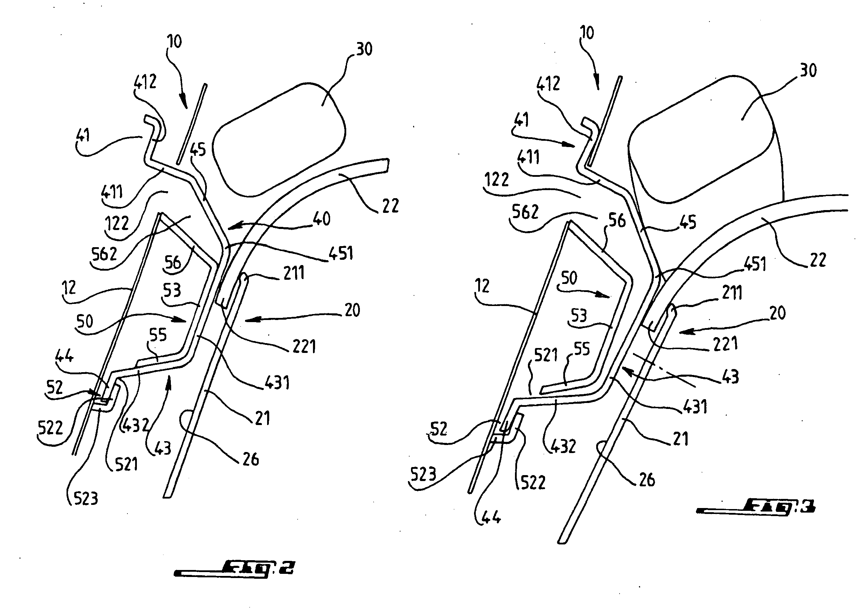

Comme on le voit sur la figure 2, les pattes de butée 412 sont à distance du panneau latéral arrière 12 en position d'attente de la rampe mobile 50.

Quand la rampe mobile 40 passe de sa position d'attente à sa position de passage par basculement sur les pattes inférieures 44, les branches de butée 412 viennent en butée sur le panneau latéral arrière 12, bloquant la rampe dans sa position de passage.

On notera que deux sillons parallèles 562 sont ménagés dans le bord dressé supérieur 56 de la rampe fixe 50 pour permettre le mouvement des branches de liaison 411.

Les premier et second organes de verrouillage 51 et 42 des rampes fixe et mobile 50 et 40 comprennent respectivement deux orifices de verrouillage ménagés dans la face fixe intérieure 53 et dans le bord dressé supérieur 56, et deux doigts de verrouillage, complémentaires des orifices, portés par la face mobile intérieure 431 et faisant saillie à partir de celle-ci vers la rampe fixe 50.

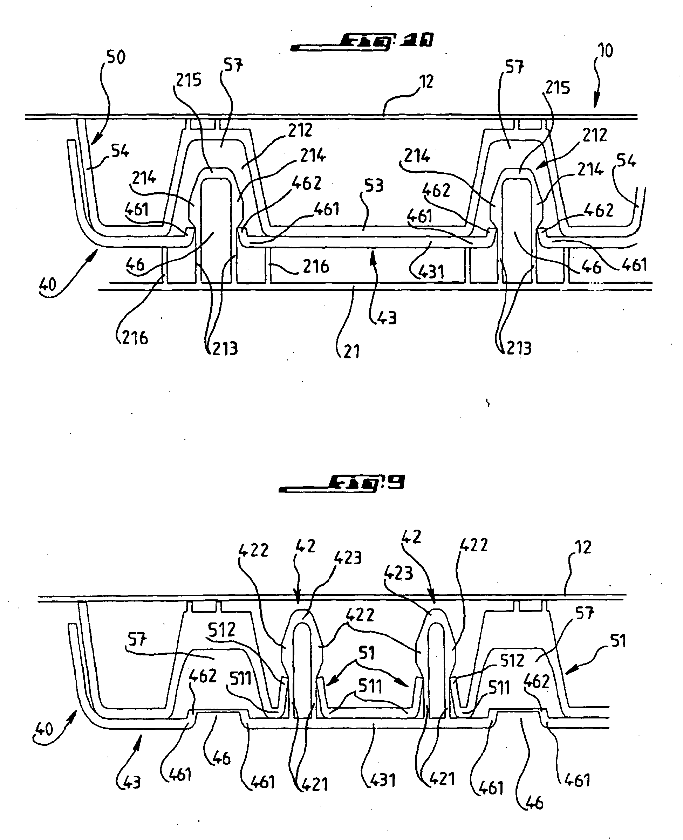

Comme le montrent les figures 2 et 9, les orifices de verrouillage 51 présentent chacun une forme sensiblement rectangulaire, allongée suivant une direction longitudinale perpendiculaire aux côtés de la face 431 où se dressent les bords dressés inférieur et supérieur 55 et 56.

Chaque orifice 51 est délimité de deux côtés latéraux opposés par deux bords latéraux 511 parallèles, la rampe fixe comprenant des rebords 512 se dressant à partir des bords latéraux 511 d'un côté de la face fixe intérieure 53 opposé à la face mobile intérieure 431.

Les doigts de verrouillage 42 comprend un corps principal 421 de section en U perpendiculairement à la direction longitudinale, et des reliefs de blocage 422 formés sur le corps principal.

Plus précisément, le corps principal 421 comprend deux plaques planes parallèles, chacune solidaire de la face mobile intérieure 431 par un côté, réunies par un nez 423 d'un côté opposé à cette face. Chaque plaque plane porte un relief de blocage 422 faisant saillie sur une face de cette plaque opposée à l'autre plaque, à proximité du nez 423.

Les bords latéraux 511 sont séparés par un écartement transversal e1. Les rebords 512 sont inclinés l'un vers l'autre, de telle sorte que leurs bords libres respectifs sont séparés par un écartement transversal e2 inférieur à e1.

Le corps principal 421 présente une largeur transversale l1 inférieure à e2, et, au niveau des reliefs 422, le doigt de verrouillage 42 présente une largeur transversale 12 comprise entre e1 et e2.

Les doigts de verrouillage 42 sont engagés élastiquement dans les orifices de verrouillage 51 en position d'attente de la rampe mobile 40.

Les reliefs de blocage 422 sont alors engagés au-delà des rebords 512 et sont tournés vers ces rebords 512. Les doigts 42 sont alors bloqués en position engagée par les reliefs 422.

On notera que les reliefs 422 présentent des profils relativement aplatis par rapport aux deux plaques du corps principal 421, ce qui rend possible le dégagement des doigts 42 des orifices 51 en exerçant un effort modéré sur la rampe mobile 40.

La première pièce 21 de l'habillage est fixée de la même façon sur la rampe mobile 50. La première pièce 21 comprend à cet effet deux doigts de fixation 212 encliquetés élastiquement dans deux orifices de fixation 46 de la rampe mobile 40 complémentaires des doigts.

Comme le montrent les figures 8 et 10, les orifices de fixation 46 comprennent chacun une partie principale portée par la face mobile intérieure 431 de forme sensiblement rectangulaire, allongée suivant une direction longitudinale perpendiculaire aux côtés de la face 431 où se dressent le bord mobile dressé inférieur 432 et la face supérieure 45. Ces orifices se prolongent sur le bord dressé mobile inférieur.

La partie principale de chaque orifice 46 est délimitée de deux côtés latéraux opposés par deux bords latéraux de fixation 461 parallèles, la rampe mobile 40 comprenant des rebords de fixation 462 se dressant à partir des bords latéraux de fixation 461 d'un côté de la face mobile intérieure 431 opposé à la première pièce 21.

Les doigts de fixation 212 comprennent chacun un corps principal de fixation 213 de section en U perpendiculairement à la direction longitudinale, et des reliefs de fixation 214 formés sur le corps principal.

Plus précisément, le corps principal de fixation 213 comprend deux plaques planes parallèles solidaires de la première pièce 21 par un côté, et réunies par un nez de fixation 215 d'un côté opposé à cette pièce. Chaque plaque plane porte un relief de blocage 214 faisant saillie sur une face de cette plaque opposée à l'autre plaque, à proximité du nez 215.

Les bords latéraux de fixation 461 sont séparés par un écartement transversal e3. Les rebords de fixation 462 sont inclinés l'un vers l'autre, de telle sorte que leurs bords libres respectifs sont séparés par un écartement transversal e4 inférieur à e3.

Le corps principal de fixation 213 présente une largeur transversale 13 inférieure à e4, et, au niveau des reliefs 214, le doigt de fixation 212 présente une largeur transversale 14 comprise entre e3 et e4.

Les doigts de fixation 212 sont engagés élastiquement dans les orifices de fixation 46 de façon à ce que les reliefs de fixation 214 soient tournés vers les rebords de fixation 462 et engagés au-delà de ces rebords. Les doigts 212 sont alors bloqués en position engagée par les reliefs 214.

On notera que les reliefs de fixation 214 présentent, au moins du côté de la première pièce 21, des profils beaucoup plus marqués que les reliefs de blocage 422, ce qui rend le dégagement des doigts de fixation difficile.

Des creux 57 sont ménagés dans la face fixe intérieure 53 et dans le bord dressé inférieur 55, en regard des orifices de fixation 46, pour recevoir les doigts de fixation 212.

Des nervures de raidissement 216 longitudinales portées par la face de la première pièce 21 tournée vers la rampe mobile 40 s'étendent de chaque côté des doigts de fixation 212, et prennent appui par leurs bords libres respectifs sur la rampe mobile.

Par ailleurs, comme on le voit sur les figures 2 à 4, la face supérieure 45 de la rampe mobile 40 est délimitée du côté de l'habillage 20 par un bord intérieur 451, qui forme une arête commune à la face supérieure 45 et à la face mobile intérieure 431 .

La première pièce 21 est délimitée par un bord supérieur 211 s'étendant, au moins localement, parallèlement au bord intérieur 451, à proximité de celui-ci.

La seconde pièce 22 est délimitée par un bord inférieur 221 engagé, au moins sur une partie de sa longueur, entre ledit bord intérieur 451 et ledit bord supérieur 211, de telle sorte que les sollicitations de sac 30 sur la seconde pièce 22 en direction opposée à la carrosserie 10 se transmette à la première pièce 21 .

Quand la sollicitation du sac sur la seconde pièce 22 dépasse la seconde valeur prédéterminée, le bord inférieur 221 de la seconde pièce 22 se dégage de la première pièce 21, comme représenté sur la figure 4, créant ainsi l'ouverture 23 entre le bord inférieur 221 de la seconde pièce 22 et le bord supérieur 211 de la première pièce 21.

On notera également que le bord supérieur 21 est parfaitement dans le prolongement de la face supérieur 45 de la rampe mobile 40, assurant ainsi un parfait guidage du sac 30 vers l'ouverture 23.

Enfin, les rampes fixes et mobiles 50 et 40 sont des pièces moulées en matière thermoplastique.

On comprend donc bien que l'invention présente de nombreux avantages.

Le sac 30 en se gonflant sollicite la seconde pièce 21 vers l'intérieur du véhicule, ce qui a, dans un premier temps, pour effet de dégager les doigts de verrouillage 42 des orifices correspondant et de faire basculer la rampe mobile 40 jusqu'à ce que les pattes de butée 41 viennent en appui sur la carrosserie, interrompant ainsi le mouvement.

Dans un deuxième temps, la sollicitation du sac sur la seconde pièce d'habillage provoque l'écartement des première et seconde pièces de l'habillage, le sac étant guidé vers l'ouverture ainsi créée par la face supérieure de la rampe mobile.

Le basculement de la rampe mobile a pour effet d'écarter l'habillage de la carrosserie, ce qui permet à la sangle de débattre plus facilement dans l'espace ainsi dégagé, et en particulier entre les nervures portées par l'habillage et la carrosserie. Il n'y a pas de risque que la sangle soit pincée entre ces nervures et la carrosserie, ce qui nuirait à la rapidité du déploiement du sac.

Par ailleurs, la première pièce d'habillage est solidement fixée sur la rampe mobile par les doigts de fixation 212, ce qui élimine le risque qu'elle soit éjectée et blesse les passagers quand le sac se déploie.

Les caractéristiques géométriques des doigts de verrouillage et des orifices associés, et la première valeur prédéterminée de sollicitation du sac sur la seconde pièce d'habillage provoquant le basculement de la rampe mobile, sont déterminées par calcul et validées par des essais.

De même, les caractéristiques géométriques des doigts de fixation et des orifices associés, et la seconde valeur prédéterminée de sollicitation du sac sur la seconde pièce d'habillage provoquant l'écartement des première et seconde pièces d'habillage, sont déterminées par calcul et validées par des essais.

On notera que la rampe fixe se fixe facilement sur la carrosserie, et que la rampe mobile se monte également facilement sur la rampe fixe.

L'invention a été décrite pour un sac gonflable dit rideau disposé sous le pavillon du véhicule, mais peut s'appliquer à un sac gonflable disposé en tout autre point du véhicule.

## Revendications

1. Véhicule automobile comprenant une carrosserie (10), un habillage (20) lié à la carrosserie (10) et interposé entre cette carrosserie (10) et l'intérieur du véhicule, un sac gonflable (30) lié à la carrosserie (10) et normalement disposé entre la carrosserie (10) et l'habillage (20), des moyens de gonflage du sac (30) en cas de choc, et au moins une sangle de guidage (31) s'étendant normalement entre la carrosserie (10) et l'habillage (20), la sangle (31) étant solidaire de la carrosserie (21) par une première extrémité (311) et du sac (30) par une seconde extrémité (312) opposée à la première, le sac (30) en se gonflant se déployant à l'intérieur du véhicule en entraînant la sangle (31), le véhicule comprenant des moyens pour écarter l'habillage (20) de la carrosserie (10) quand le sac (30) se gonfle **caractérisé en ce que** ces moyens comprennent une rampe mobile (40) liée à la carrosserie (10) et mobile par rapport à celle-ci entre une position d'attente relativement plus proche de la carrosserie (10) et une position de passage relativement plus écartée de la carrosserie (10), l'habillage (20) étant fixé à la rampe mobile (40), le sac sollicitant la rampe mobile (40) de sa position d'attente à sa position de passage quand il se gonfle, de façon à faciliter le déploiement de la sangle (31).

2. Véhicule selon la revendication 1, **caractérisé en ce que** la rampe mobile (40) comprend des moyens de butée limitant la course de la rampe mobile (40) de sa position d'attente à sa position de passage.

3. Véhicule selon la revendication 1 ou 2, **caractérisé en ce que** les moyens pour écarter l'habillage comprennent une rampe fixe (50) fixée à la carrosserie (10) et portant un premier organe de verrouillage (51), la rampe mobile (40) portant un second organe de verrouillage (42) coopérant mobile (40) dans sa position d'attente quand la sollicitation du sac (30) sur l'habillage (20) est inférieure à une première valeur prédéterminée, et libérant la rampe mobile (40) de sa position d'attente quand la sollicitation du sac (30) sur l'habillage (20) est supérieure à la première valeur prédéterminée.

4. Véhicule selon la revendication 3, **caractérisé en ce que** la rampe mobile (40) comprend un corps (43) portant le second organe de verrouillage (42) et auquel l'habillage (20) est lié, et au moins une patte inférieure (44) solidaire du corps (43) et engagée dans un logement (52) de la rampe fixe (50) complémentaire de ladite patte, la rampe mobile (40) reposant sur un fond (523) du logement (52) par l'intermédiaire de la patte (44) et passant de sa position d'attente à sa position de passage par basculement sur cette patte inférieure (44).

5. Véhicule selon la revendication 3 ou 4, **caractérisé en ce que** l'habillage comprend un habillage latéral (21) et un habillage (22) du pavillon du véhicule, l'habillage latéral (21) étant rigidement fixé à la rampe mobile (40), l'habillage (22) du pavillon étant contiguë à l'habillage latéral (21) et disposé en regard du sac (30) de telle sorte que le sac (30) sollicite l'habillage (22) du pavillon dans une direction opposée à la carrosserie (10) quand il se gonfle, et des moyens de liaison entre l'habillage latéral (21) et l'habillage (22) du pavillon, transmettant à l'habillage latéral (21) la sollicitation subie par l'habillage (22) du pavillon jusqu'à ce que cette sollicitation dépasse une seconde valeur prédéterminée supérieure à la première, les moyens de liaison autorisant au-delà de la seconde valeur un écartement mutuel de l'habillage latéral (21) et de l'habillage (22) du pavillon, définissant une ouverture (23) par laquelle le sac (30) se déploie à l'intérieur du véhicule.

6. Véhicule selon la revendication 5, **caractérisé en ce que** la rampe mobile (40) présente une face supérieure (45) tournée vers le sac (30) et s'étendant entre la carrosserie (10) et une zone de l'habillage (20) dans laquelle l'ouverture (23) se crée quand le sac (30) se gonfle.

7. Véhicule selon la revendication 6, **caractérisé en ce que** la face supérieure (45) de la rampe mobile (40) est délimitée du c8té de l'habillage. (20) par un bord intérieur (451), l'habillage latéral (21) comprenant un bord supérieur (211) s'étendant parallèlement au bord intérieur (451), à proximité de celui-ci, l'habillage (22) du pavillon comprenant un bord inférieur (221) engagé entre ledit bord intérieur (451) et ledit bord supérieur (211).

8. Véhicule selon l'une des revendications 5 à 7, **caractérisé en ce que** l'habillage latéral (21) comprend au moins un doigt de fixation (212) encliqueté élastiquement dans un orifice de fixation (46) de la rampe mobile (40) complémentaire dudit doigt.

9. Véhicule selon l'une quelconque des revendications 3 à 8, **caractérisé en ce que** le second organe de verrouillage (42) est un doigt de verrouillage, le premier organe de verrouillage (51) étant un orifice de verrouillage complémentaire dudit doigt et dans lequel le doigt de fixation (42) est encliqueté élastiquement dans la position d'attente de la rampe mobile (40).

## Claims

1. Motor vehicle comprising bodywork (10) and a lining (20) joined to the bodywork (10), an airbag (30) inserted between said bodywork (10) and the inside of the vehicle, said airbag being joined to the bodywork (10) and normally arranged between the bodywork (10) and the lining (20), means for inflating the airbag (30) in the event of impact, and at least one guide strap (31) normally extending between the bodywork (10) and the lining (20), the strap (31) being secured to the bodywork (21) via a first end (311) and to the airbag (30) via a second end (312) opposite the first end, the airbag (30) on being inflated being deployed inside the vehicle while pulling on the strap (31), the vehicle comprising means to draw the lining (20) away from the bodywork (10) when the airbag (30) is inflated **characterized in that** these means comprise a mobile ramp (40) joined to the bodywork (10) and mobile relative thereto between a standby position relatively closer to the bodywork (10) and a moved position relatively more spaced away from the bodywork (10), the lining (20) being fixed to the mobile ramp (40), the airbag when it is inflated urging the mobile ramp (40) from its standby position to its moved position, so that the displacement of the strap (31) is facilitated.

2. Vehicle according to claim 1, **characterized in that** the mobile ramp (40) comprises abutment means limiting the travel distance of the mobile ramp (40) from its standby position to its moved position.

3. Vehicle according to claim 1 or 2, **characterized in that** the means for drawing away the lining comprise a fixed ramp (50) secured to the bodywork (10) and carrying a first locking member (51), the mobile ramp (40) carrying a second locking member (42) cooperating with the first so as to lock the mobile ramp (40) removably in its standby position when the demand placed by the airbag (30) on the lining (20) is lower than a first predetermined value, and so as to release the mobile ramp (40) from its standby position when the demand placed by the airbag (30) on the lining (20) is greater than the first predetermined value.

4. Vehicle according to claim 3, **characterized in that** the mobile ramp (40) comprises a body (43) carrying the second locking member (42) and to which the lining (20) is joined, and at least one lower lug (44) secured to the body (43) and engaged in a housing (52) of the fixed ramp (50) mating with said lug, the mobile ramp (40) resting on a bottom part (523) of the housing (52) via the lug (44) and changing over from its standby position to its moved position by tilting on this lower lug (44).

5. Vehicle according to claim 3 or 4, **characterized in that** the lining comprises a side lining (11) and a headlining (22), the side lining (21) being rigidly fixed to the mobile ramp (40), the headlining (22) being contiguous with the side lining (21) and arranged facing the airbag (30), so that the airbag (30) urges the headlining (22) in a direction opposite the bodywork (10) when it is inflated, and comprises connecting means between the side lining (21) and headlining (22) transmitting the demand placed on the roof lining (22) to the side lining (21) until this demand exceeds a second predetermined value greater than the first, the connecting means beyond this second value permitting mutual spacing apart of the side lining (21) and headlining (22) to define an opening (23) through which the airbag (30) is deployed inside the vehicle.

6. Vehicle according to claim 5, **characterized in that** the mobile ramp (40) has an upper face (45) facing the airbag (30) and extending between the bodywork (10) and a portion of lining (20) in which the opening (23) is created when the airbag (30) is inflated.

7. Vehicle according to claim 6, **characterized in that** the upper face (45) of the mobile ramp (40) is delimited on the lining side (20) by an inner edge (451), the side lining (21) comprising an upper edge (211) extending parallel to the inner edge (451) in its vicinity, the headlining (22) comprising a lower edge (221) engaged between said inner edge (451) and said upper edge (211).

8. Vehicle according to any of claims 5 to 7, **characterized in that** the side lining (21) comprises at least one attaching finger (212) elastically press-fitted into an attaching orifice (46) of the mobile ramp (40) mating with said finger.

9. Vehicle according to any of claims 3 to 8, **characterized in that** the second locking member (42) is a locking finger, the first locking member (51) being a locking orifice mating with said finger and into which the attaching finger (42) is elastically press-fitted in the standby position of the mobile ramp (40).

## Patentansprüche

1. Kraftfahrzeug, umfassend eine Karosserie (10), eine mit der Karosserie (10) verbundene Verkleidung (20), die sich zwischen dieser Karosserie (10) und dem Fahrzeuginnenraum befindet, einen mit der Karosserie (10) verbundenen und normalerweise zwischen der Karosserie (10) und der Verkleidung (20) angeordneten Gassack (30), Mittel zum Aufblasen des Sacks (30) bei einem Aufprall und mindestens einen Führungsgurt (31), der sich normalerweise zwischen der Karosserie (10) und der Verkleidung (20) erstreckt, wobei der Gurt (31) durch ein erstes Ende (311) mit der Karosserie (21) und durch ein zweites Ende (312), das dem ersten gegenüberliegt, mit dem Sack (30) verbunden ist, wobei sich der Sack (30), wenn er sich aufbläst, im Fahrzeuginnenraum entfaltet und dabei den Gurt (31) mitnimmt, wobei das Fahrzeug Mittel umfasst, um die Verkleidung (20) von der Karosserie (10) abzuspreizen, wenn sich der Sack (30) aufbläst, **dadurch gekennzeichnet dass** diese Mittel eine bewegliche Rampe (40) umfassen, die mit der Karosserie (10) verbunden ist und im Verhältnis zu dieser zwischen einer zur Karosserie (10) relativ näheren Wartestellung und einer zur Karosserie (10) relativ entfernteren Durchgangsstellung beweglich ist, wobei die Verkleidung (20) an der beweglichen Rampe (40) befestigt ist und wobei der Sack die Bewegung der beweglichen Rampe (40) von ihrer Wartestellung in ihre Durchgangsstellung bewirkt, wenn er sich aufbläst, um die Entfaltung des Gurts zu erleichtern.

2. Fahrzeug nach Anspruch 1, **dadurch gekennzeichnet, dass** die bewegliche Rampe (40) Anschlagmittel umfasst, die den Weg der beweglichen Rampe (40) von ihrer Wartestellung in ihre Übergangsstellung begrenzen.

3. Fahrzeug nach Anspruch 1 oder 2, **dadurch gekennzeichnet, dass** die Mittel zum Abspreizen der Verkleidung eine starre Rampe (50) umfassen, die an der Karosserie (10) befestigt ist und ein erstes Verriegelungsorgan (51) trägt, wobei die bewegliche Rampe (40) ein zweites Verriegelungsorgan (42) trägt, das mit dem ersten Organ zusammenwirkt, um die bewegliche Rampe (40) in ihrer Wartestellung beweglich zu verriegeln, wenn die Beanspruchung des Sacks (30) auf die Verkleidung (20) unter einem vorbestimmten Wert liegt, und die bewegliche Rampe (40) aus ihrer Wartestellung freigibt, wenn die Beanspruchung des Sacks (30) auf die Verkleidung (20) über dem ersten vorbestimmten Wert liegt.

4. Fahrzeug nach Anspruch 3, **dadurch gekennzeichnet, dass** die bewegliche Rampe (40) einen Körper (43) umfasst, der das zweite Verriegelungsorgan (42) trägt und mit dem die Verkleidung (20) verbunden ist, und mindestens eine untere Lasche (44), die mit dem Körper (43) verbunden ist und in eine Aufnahme (52) der starren Rampe (50) eingreift, die zu dieser Lasche komplementär ist, wobei die bewegliche Rampe (40) durch die Lasche (44) auf einem Boden (523) der Aufnahme (52) ruht und von ihrer Wartestellung in ihre Übergangsstellung durch Schwenken über diese untere Lasche (44) übergeht.

5. Fahrzeug nach Anspruch 3 oder 4, **dadurch gekennzeichnet, dass** die Verkleidung eine Seitenverkleidung (21) und eine Verkleidung (22) des Fahrzeugdachs umfasst, wobei die Seitenverkleidung (21) an der beweglichen Rampe (40) starr befestigt ist, wobei die Verkleidung (22) des Dachs an die Seitenverkleidung (21) angrenzt und gegenüber dem Sack (30) derart angeordnet ist, dass der Sack (30) die Verkleidung (22) des Dachs in eine Richtung entgegengesetzt zur Karosserie (10) beansprucht, wenn er sich aufbläst, und Verbindungsmittel zwischen der Seitenverkleidung (21) und der Verkleidung (22) des Dachs, die der Seitenverkleidung (21) die Beanspruchung übertragen, der die Verkleidung (22) des Dachs ausgesetzt ist, bis diese Beanspruchung einen zweiten vorbestimmten Wert überschreitet, der über dem ersten Wert liegt, wobei die Verbindungsmittel über dem zweiten Wert ein gegenseitiges Abspreizen der Seitenverkleidung (21) und der Verkleidung (22) des Dachs erlauben, wodurch eine Öffnung (23) definiert wird, durch die sich der Sack (30) im Fahrzeuginnenraum entfaltet.

6. Fahrzeug nach Anspruch 5, **dadurch gekennzeichnet, dass** die bewegliche Rampe (40) eine Oberseite (45) aufweist, die in Richtung Sack (30) gedreht ist und sich zwischen der Karosserie (10) und einem Bereich der Verkleidung (20) erstreckt, in dem sich die Öffnung (23) bildet, wenn sich der Sack (30) aufbläst.

7. Fahrzeug nach Anspruch 6, **dadurch gekennzeichnet, dass** die Oberseite (45) der beweglichen Rampe (40) verkleidungsseitig (20) von einem Innenrand (451) begrenzt wird, wobei die Seitenverkleidung (21) einen oberen Rand (211) umfasst, der sich parallel zum Innenrand (451) in der Nähe desselben erstreckt, wobei die Verkleidung (22) des Dachs einen unteren Rand (221) umfasst, der zwischen dem besagten Innenrand (451) und dem besagten oberen Rand (211) eingreift.

8. Fahrzeug nach einem der Ansprüche 5 bis 7, **dadurch gekennzeichnet, dass** die Seitenverkleidung (21) mindestens einen Befestigungsfinger (212) umfasst, der elastisch in eine Befestigungsöffnung (46) der beweglichen Rampe (40), die komplementär zum besagten Finger ist, einrastet.

9. Fahrzeug nach einem der Ansprüche 3 bis 8, **dadurch gekennzeichnet, dass** das zweite Verriegelungsorgan (42) ein Verriegelungsfinger ist, wobei das erste Verriegelungsorgan (51) eine Verriegelungsöffnung komplementär zum besagten Finger ist und in die der Befestigungsfinger (42) in der Wartestellung der beweglichen Rampe (40) elastisch eingerastet ist.
